(19) Europäisches Patentamt
European Patent Office
Office européen des brevets

(11) **EP 4 645 940 A1**

(12) **EUROPEAN PATENT APPLICATION**
published in accordance with Art. 153(4) EPC

(43) Date of publication:
**05.11.2025 Bulletin 2025/45**

(51) International Patent Classification (IPC):
***H04W 24/08*** (2009.01)

(21) Application number: **23917305.7**

(52) Cooperative Patent Classification (CPC):
**H04B 7/185; H04W 24/02; H04W 24/04; H04W 24/08; H04W 56/00**

(22) Date of filing: **20.12.2023**

(86) International application number:
**PCT/CN2023/140264**

(87) International publication number:
**WO 2024/152838 (25.07.2024 Gazette 2024/30)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **20.01.2023 CN 202310101444**

(71) Applicant: **Huawei Technologies Co., Ltd.
Shenzhen, Guangdong 518129 (CN)**

(72) Inventors:
• **LU, Rui
Shenzhen, Guangdong 518129 (CN)**
• **HU, Xingxing
Shenzhen, Guangdong 518129 (CN)**
• **ZHENG, Lili
Shenzhen, Guangdong 518129 (CN)**
• **ZHANG, Li
Shenzhen, Guangdong 518129 (CN)**

(74) Representative: **Grünecker Patent- und Rechtsanwälte
PartG mbB
Leopoldstraße 4
80802 München (DE)**

(54) **COMMUNICATION METHOD, APPARATUS, AND STORAGE MEDIUM**

(57) This application discloses a communication method and apparatus, and a storage medium. In this application, after receiving a first offset at a first moment, a terminal adjusts the first offset at the first moment based on the first offset at the first moment and a first propagation delay difference that corresponds to the first moment and that is between a feeder link of a serving cell and that of a neighboring cell, to obtain a second offset at a second moment. Therefore, an accurate offset may be obtained and accuracy of neighboring cell measurement is improved.

FIG. 6

## Description

This application claims priority to Chinese Patent Application No. 202310101444.3, filed with the China National Intellectual Property Administration on January 20, 2023, and entitled "COMMUNICATION METHOD AND APPARATUS, AND STORAGE MEDIUM", which is incorporated herein by reference in its entirety.

## TECHNICAL FIELD

This application relates to the field of communication technologies, and in particular, to a communication method and apparatus, and a storage medium.

## BACKGROUND

Non-terrestrial communication (non-terrestrial network, NTN) is communication implemented by using non-terrestrial network devices. The non-terrestrial network devices include air network devices such as satellite communication systems, uncrewed aerial vehicle communication systems, and high-altitude platform station (high-altitude platform station, HAPS) communication systems. The NTN has advantages of wide coverage, long communication distance, high reliability, high flexibility, high throughput, and the like. In addition, the NTN is not affected by geographical environments, climate conditions, and natural disasters. Therefore, the NTN has been widely used in fields, such as aeronautical communication, maritime communication, and military communication. Introducing the NTN to a future 5th generation (5th generation, 5G) mobile network can greatly improve user experience. The NTN may provide communication services for areas that are difficult to be covered by terrestrial networks, such as oceans, forests, deserts, or remote areas. In addition, the NTN may enhance reliability of 5G communication, for example, provide more stable communication services for users in high-speed movement scenarios such as trains and airplanes. Moreover, the NTN may further provide more data transmission resources to support more connections. Thanks to a concept of "anytime and anywhere" communication, a satellite communication network is playing a more important role in future.

In a cell selection/reselection or handover scenario, a network side delivers measurement configuration information to a terminal device for measurement. The measurement configuration information includes a synchronization signal block-based measurement timing configuration (SSB-based measurement timing configuration) ("SMTC configuration" for short). The SMTC configuration includes a periodicity, duration, and an SMTC offset (offset), and is used to determine a measurement window. However, after the network side delivers the offset, the terminal device may perform corresponding measurement after a period of time. However, in this period of time, a satellite has moved to a large extent. Satellite movement causes mismatch between the offset configured by the network side and an offset actually needed by the terminal during actual measurement. Consequently, the offset configured by the network side is inaccurate, and measurement accuracy is affected.

## SUMMARY

This application provides a communication method and apparatus, and a storage medium, to improve accuracy of neighboring cell measurement.

According to a first aspect, a communication method is provided. The method includes: A terminal device receives first information, where the first information includes a first offset at a first moment, and the first offset is used to determine a measurement window; and adjusts the first offset at the first moment based on the offset at the first moment and a first propagation delay difference that corresponds to the first moment and that is between a feeder link of a serving cell and that of a neighboring cell, to obtain a second offset at a second moment.

Equivalently, the adjusting the first offset at the first moment to obtain a second offset at a second moment may alternatively be expressed as compensating for a change of a feeder link propagation delay caused by satellite movement to obtain a second offset at a second moment, or may be expressed as adjusting a second offset at a second moment.

In this aspect, after receiving the first offset at the first moment, the terminal adjusts the first offset at the first moment based on the first offset at the first moment and the first propagation delay difference that corresponds to the first moment and that is between the feeder link of the serving cell and that of the neighboring cell, to obtain the second offset at the second moment. Therefore, an accurate offset may be obtained and accuracy of neighboring cell measurement is improved.

In a possible implementation, the first propagation delay difference is a feeder link propagation delay difference between the serving cell and the neighboring cell, or the first propagation delay difference is a common timing advance CommonTA difference between the serving cell and the neighboring cell.

In this implementation, if a base station has compensated for a propagation delay between an uplink synchronization reference point and the base station when configuring the first offset, the first propagation delay difference is the CommonTA difference between the serving cell and the neighboring cell. If a base station does not compensate for a propagation delay between an uplink synchronization reference point and the base station when configuring the first offset, the first propagation delay difference is a propagation delay difference between each of a serving cell satellite and a neighboring cell satellite and each base station, that is, including CommonTA and $K_{mac}$.

In another possible implementation, the method further includes: obtaining the first propagation delay difference.

In still another possible implementation, the obtaining the first propagation delay difference includes: obtaining the first moment; receiving second information, where the second information includes a feeder link related parameter; and determining the first propagation delay difference based on the first moment and the feeder link related parameter.

In still another possible implementation, the determining the first propagation delay difference includes: determining the first propagation delay difference based on the first moment and feeder link related parameters of the serving cell and the neighboring cell.

In this implementation, the terminal may determine the first propagation delay difference.

In still another possible implementation, the first information further includes the first moment.

In still another possible implementation, the first information is system information, and the first moment is an end moment of a system information window of the first information.

In this implementation, the first moment is the end moment of the system information window of the first information, thereby reducing signaling overheads of the first information.

In still another possible implementation, the first moment is a reference time, and the reference time is a reference time of ephemeris information and a common timing advance.

In this implementation, the first moment is the reference time, thereby reducing signaling overheads of the first information.

In still another possible implementation, the first information further includes the first propagation delay difference.

In this implementation, an access network device may send the first propagation delay difference to the terminal, which has a low requirement on a computing capability of the terminal.

In still another possible implementation, the adjusting the first offset at the first moment based on the offset at the first moment and a first propagation delay difference that corresponds to the first moment and that is between a feeder link of a serving cell and that of a neighboring cell, to obtain a second offset at a second moment includes: determining the second offset at the second moment based on the following formula: $offset\_T2=(SL2\_T2-SL1\_T2)+(FL2\_T2-FL1\_T2)+(FL2\_T1-FL1\_T1+T\_sfn)-(FL2\_T1-FL1\_T1)$, where $offset\_T2$ is the second offset at the second moment, $SL2\_T2$ is a service link propagation delay of the neighboring cell at the second moment, $SL1\_T2$ is a service link propagation delay of the serving cell at the second moment, $FL2\_T2$ is a feeder link propagation delay of the neighboring cell at the second moment, $FL1\_T2$ is a feeder link propagation delay of the serving cell at the second moment, and $T\_sfn$ is a timing difference between signal sending of the serving cell and signal sending of the neighboring cell.

In still another possible implementation, a time difference between the second moment and the first moment exceeds a specified time difference.

In this implementation, if the terminal configures measurement within time Delta T1 after receiving the first offset (that is, the time difference between the second moment and the first moment does not exceed the specified time difference), it may be considered that a change of the first offset caused by the satellite movement is small. Therefore, the first offset delivered by the base station may be directly used to calculate an SMTC offset, and the foregoing adjustment does not need to be performed on the first offset. Otherwise, if the time difference between the second moment and the first moment exceeds the specified time difference, the foregoing adjustment needs to be performed.

In still another possible implementation, the specified time difference is carried in the first information; or the specified time difference is pre-negotiated; or the specified time difference is timing duration of a timer.

According to a second aspect, a communication method is provided. The method includes: A network device obtains first information, where the first information indicates a first moment and a first offset at the first moment, and the first information is used to determine a measurement window; and sends the first information.

In this aspect, the network device sends the first information to a terminal, where the first information includes the first offset at the first moment. After receiving the first offset at the first moment, the terminal adjusts the first offset at the first moment based on the first offset at the first moment and a first propagation delay difference that corresponds to the first moment and that is between a feeder link of a serving cell and that of a neighboring cell, to obtain a second offset at a second moment. Therefore, an accurate offset may be obtained, and accuracy of neighboring cell measurement is improved.

In a possible implementation, the method further includes: receiving second information from a neighboring cell base station, where the second information includes a third offset: and determining the first offset based on the second information.

In this implementation, a manner of determining the first offset by a serving base station is specified, and accuracy of the first offset is improved.

In another possible implementation, the third offset is based on a first propagation delay in a feeder link of a neighboring cell, the second information further includes a third moment, and the third moment is a moment corresponding to the third offset. That the third offset is based on a first propagation delay in a feeder link of a neighboring cell means that the first propagation delay in the feeder link is considered when the third offset is determined.

The first propagation delay is a first propagation delay corresponding to the third moment.

In a possible implementation, the first propagation delay is a feeder link propagation delay corresponding to the third moment, or the first propagation delay is a common timing advance CommonTA corresponding to the third moment.

In still another possible implementation, the method further includes: determining a feeder link propagation delay of the neighboring cell at the third moment based on the third moment and feeder link information of the neighboring cell; and determining a feeder link propagation delay of the neighboring cell at the first moment based on the feeder link information of the neighboring cell (for example, a related parameter of CommonTA); and optionally, determining a feeder link propagation delay of the neighboring cell at the first moment based on ephemeris information of the neighboring cell; and adjusting the third offset based on the feeder link propagation delay of the neighboring cell at the third moment and the feeder link propagation delay of the neighboring cell at the first moment, to obtain the first offset.

In this implementation, when the third offset is based on the first propagation delay in the feeder link of the neighboring cell, the serving base station may adjust the third offset based on the feeder link propagation delay of the neighboring cell at the third moment and the feeder link propagation delay of the neighboring cell at the first moment, to accurately obtain the first offset.

In still another possible implementation, the third offset is not based on a first propagation delay in a feeder link of a neighboring cell. That the third offset is not based on a first propagation delay in a feeder link of a neighboring cell means that the first propagation delay in the feeder link is not considered when the third offset is determined.

In still another possible implementation, the method further includes: determining a feeder link propagation delay of the neighboring cell at the first moment based on feeder link information of the neighboring cell; and adjusting the third offset based on the feeder link propagation delay of the neighboring cell at the first moment, to obtain the first offset.

In this implementation, when the third offset is not based on a first propagation delay in a feeder link of a neighboring cell, the serving base station may determine the feeder link propagation delay of the neighboring cell at the first moment based on the feeder link information of the neighboring cell, and adjust the third offset based on the feeder link propagation delay of the neighboring cell at the first moment, to obtain the first offset. Therefore, accuracy of the first offset is improved.

According to a third aspect, a communication apparatus is provided. The communication apparatus may implement the method in the first aspect. For example, the communication apparatus may be a terminal or a chip system of a terminal. The foregoing method may be implemented by software, hardware, or hardware executing corresponding software.

In a possible implementation, the apparatus includes a transceiver unit and a processing unit. The transceiver unit is configured to receive first information, where the first information includes a first offset at a first moment, and the first offset is used to determine a measurement window. The processing unit is configured to adjust the first offset at the first moment based on the offset at the first moment and a first propagation delay difference that corresponds to the first moment and that is between a feeder link of a serving cell and that of a neighboring cell, to obtain a second offset at a second moment.

Optionally, the first propagation delay difference is a feeder link propagation delay difference between the serving cell and the neighboring cell, or the first propagation delay difference is a common timing advance CommonTA difference between the serving cell and the neighboring cell.

Optionally, the processing unit is further configured to obtain the first propagation delay difference.

Optionally, the processing unit is further configured to obtain the first moment. The transceiver unit is further configured to receive second information, where the second information includes a feeder link related parameter. The processing unit is further configured to determine the first propagation delay difference based on the first moment and the feeder link related parameter.

Optionally, the first information further includes the first moment.

Optionally, the first information is system information, and the first moment is an end moment of a system information window of the first information.

Optionally, the first moment is a reference time, and the reference time is a reference time of ephemeris information and a common timing advance.

Optionally, the first information further includes the first propagation delay difference.

Optionally, the processing unit is further configured to determine the second offset at the second moment based on the following formula: $offset\_T2=(SL2\_T2-SL1\_T2)+(FL2\_T2-FL1\_T2)+(FL2\_T1-FL1\_T1+T\_sfn)-(FL2\_T1-FL1\_T1)$, where $offset\_T2$ is the second offset at the second moment, $SL2\_T2$ is a service link propagation delay of the neighboring cell at the second moment, $SL1\_T2$ is a service link propagation delay of the serving cell at the second moment, $FL2\_T2$ is a feeder link propagation delay of the neighboring cell at the second moment, $FL1\_T2$ is a feeder link propagation delay of the serving cell at the second moment, and $T\_sfn$ is a timing difference between signal sending of the serving cell and signal sending of the neighboring cell.

Optionally, a time difference between the second moment and the first moment exceeds a specified time difference.

Optionally, the specified time difference is carried in the first information; or the specified time difference is pre-negotiated; or the specified time difference is timing duration of a timer.

According to a fourth aspect, a communication apparatus is provided. The communication apparatus may implement the method in the second aspect. For example, the communication apparatus may be a network device or a chip system in a network device. The foregoing method may be implemented by software, hardware, or hardware executing corresponding software.

In a possible implementation, the apparatus includes a transceiver unit and a processing unit. The processing unit is configured to obtain first information, where the first information indicates a first moment and a first offset at the first moment, and the first information is used to determine a measurement window. The transceiver unit is configured to send the first information.

Optionally, the transceiver unit is further configured to receive second information from a neighboring cell base station, where the second information includes a third offset; and the processing unit is further configured to determine the first offset based on the second information.

Optionally, the third offset packet is based on a first propagation delay in a feeder link of a neighboring cell, the second information further includes a third moment, and the third moment is a moment corresponding to the third offset.

Optionally, the processing unit is further configured to determine a feeder link propagation delay of the neighboring cell at the third moment based on the third moment and feeder link information of the neighboring cell. The processing unit is further configured to determine a feeder link propagation delay of the neighboring cell at the first moment based on the feeder link information of the neighboring cell. The processing unit is further configured to adjust the third offset based on the feeder link propagation delay of the neighboring cell at the third moment and the feeder link propagation delay of the neighboring cell at the first moment, to obtain the first offset.

Optionally, the third offset is not based on a first propagation delay in a feeder link of a neighboring cell.

Optionally, the processing unit is further configured to determine a feeder link propagation delay of the neighboring cell at the first moment based on feeder link information of the neighboring cell. The processing unit is further configured to adjust the third offset based on the feeder link propagation delay of the neighboring cell at the first moment, to obtain the first offset.

With reference to the third aspect or the fourth aspect, in a possible implementation, the communication apparatus includes a processor coupled to a memory, and the processor is configured to support the apparatus in performing a corresponding function in the foregoing communication method. The memory is configured to be coupled to the processor, and stores a computer program (or computer-executable instructions) and/or data necessary for the apparatus. Optionally, the communication apparatus may further include a communication interface, configured to support communication between the apparatus and another network element, for example, data and/or signal sending or receiving. For example, the communication interface may be a transceiver, a circuit, a bus, a module, or a communication interface of another type. Optionally, the memory may be located inside the communication apparatus and integrated with the processor, or may be located outside the communication apparatus.

With reference to the third aspect or the fourth aspect, in another possible implementation, the communication apparatus includes a processor and a transceiver apparatus, where the processor is coupled to the transceiver apparatus. The processor is configured to execute a computer program or instructions, to control the transceiver apparatus to receive and send information. When the processor executes the computer program or the instructions, the processor is further configured to implement the foregoing method by using a logic circuit or executing code instructions. The transceiver apparatus may be a transceiver, a transceiver circuit, an interface circuit, or an input/output interface, and is configured to receive a signal from a communication apparatus other than the communication apparatus and transmit the signal to the processor, or send a signal from the processor to a communication apparatus other than the communication apparatus. When the communication apparatus is a chip, the transceiver apparatus is the transceiver circuit or the input/output interface.

When the foregoing communication apparatus is a chip, a sending unit may be an output unit, for example, an output circuit or a communication interface, and a receiving unit may be an input unit, for example, an input circuit or a communication interface. When the communication apparatus is a terminal, a sending unit may be a transmitter or a transmitter machine, and a receiving unit may be a receiver or a receiver machine.

According to a fifth aspect, a communication system is provided. The communication system includes the communication apparatus in the third aspect and the communication apparatus in the fourth aspect.

According to a sixth aspect, a computer-readable storage medium is provided, where the computer-readable storage medium stores a computer program or instructions, and when the program or the instructions is or are executed by a processor, the method according to any one of the first aspect, the second aspect, or the implementations of the first aspect or the second aspect is performed.

According to a seventh aspect, a computer program product is provided. When the computer program product is executed on a computing device, the method according to any one of the first aspect, the second aspect, or the implementations of the first aspect or the second aspect is performed.

According to an eighth aspect, a circuit is provided, where the circuit is coupled to a memory, and the circuit is configured to perform the method according to any one of the first aspect, the second aspect, or the implementations of the first aspect or the second aspect. The circuit may include a chip circuit.

## BRIEF DESCRIPTION OF DRAWINGS

FIG. 1 is a diagram of an architecture of a communication system to which an embodiment of this application is applied;
FIG. 2 is a diagram of a CU-DU architecture according to an embodiment of this application;
FIG. 3a is a diagram of an architecture of a transparent satellite according to an embodiment of this application;
FIG. 3b is a diagram of an architecture of a regenerative satellite according to an embodiment of this application;
FIG. 4 is a diagram of an NTN SMTC configuration according to an embodiment of this application;
FIG. 5 is a diagram of an example of SMTC configuration expiration caused by satellite movement according to an embodiment of this application;
FIG. 6 is a schematic flowchart of a communication method according to an embodiment of this application;
FIG. 7 is a diagram of an example of a feeder link propagation delay in an NTN according to an embodiment of this application;
FIG. 8 is a schematic flowchart of another communication method according to an embodiment of this application;
FIG. 9 is a diagram of a structure of a communication apparatus according to an embodiment of this application; and
FIG. 10 is a diagram of a structure of another communication apparatus according to an embodiment of this application.

## DESCRIPTION OF EMBODIMENTS

The following describes embodiments of this application with reference to the accompanying drawings in embodiments of this application.

Embodiments of this application may be applied to various communication systems, for example, a long term evolution (long term evolution, LTE) system, an LTE time division duplex (time division duplex, TDD) system, a 5th generation (5th generation, 5G) communication system, and a future 6th generation (6th generation, 6G) communication system.

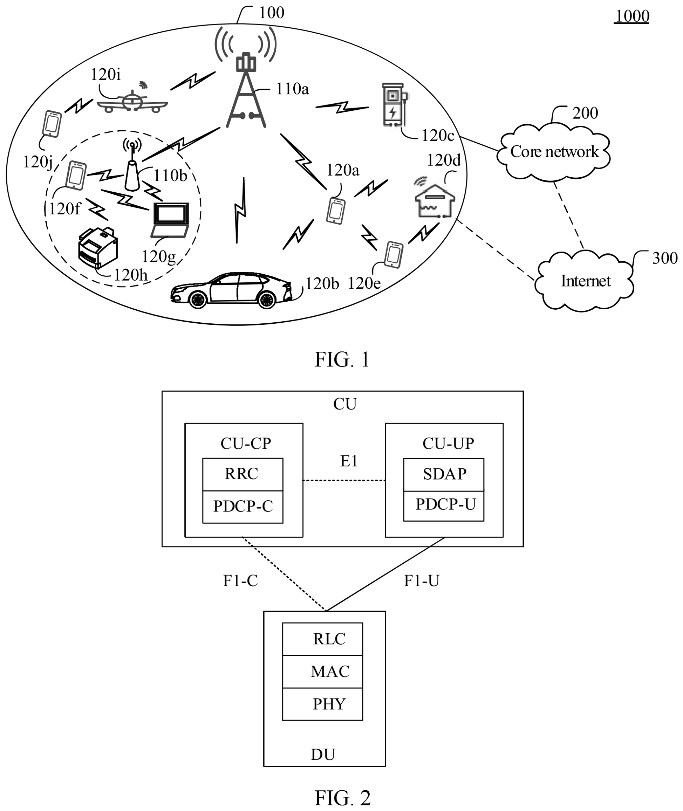

FIG. 1 is a diagram of an architecture of a communication system to which an embodiment of this application is applied. As shown in FIG. 1, the communication system 1000 includes a radio access network 100 and a core network 200. Optionally, the communication system 1000 may further include an Internet 300. The radio access network 100 may include at least one radio access network device (for example, 110a and 110b in FIG. 1), and may further include at least one terminal (for example, 120a to 120j in FIG. 1). The terminal is connected to the radio access network device in a wireless manner. The radio access network device is connected to the core network in a wireless or wired manner. A core network device and the radio access network device may be independent and different physical devices, or functions of a core network device and logical functions of the radio access network device may be integrated into a same physical device, or some functions of a core network device and some functions of the radio access network device may be integrated into one physical device. A wired or wireless manner may be used for connection between terminals and between radio access network devices. FIG. 1 is merely a diagram. The communication system may further include another network device, for example, may further include a wireless relay device and a wireless backhaul device which are not shown in FIG. 1.

The radio access network device is a radio access network (radio access network. RAN) node (or device) that connects a terminal to a wireless network, and may also be referred to as a base station. Currently, some examples of the RAN node are: a further evolved NodeB (gNB), a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or home NodeB, HNB), a baseband unit (baseband unit, BBU), a wireless fidelity (wireless fidelity, Wi-Fi) access point (access point, AP), or the like. In addition, in a network structure, an access network device may include a central unit (central unit, CU) node, a distributed unit (distributed unit. DU) node, or a RAN device including a CU node and a DU node. The RAN device including the CU node and the DU node splits protocol layers of the gNB in an NR system. Functions of some protocol layers are controlled by the CU in a centralized manner, and functions of some or all of remaining protocol layers are distributed in the DU, and the CU controls the DU in a centralized manner. Further, a central unit CU may be divided into a control plane (CU-CP) and a user plane (CU-UP). FIG. 2 is a diagram of a CU-DU architecture according to an embodiment of this application. The CU-CP is responsible for a control plane function, and mainly includes RRC and a PDCP corresponding to the control plane, namely, PDCP-C. The PDCP-C is mainly responsible for data encryption and decryption, integrity protection, data transmission, and the like on the control plane. The CU-UP is responsible for a user plane function, and mainly includes a SDAP and a PDCP corresponding to the user plane, namely, PDCP-U. The SDAP is mainly responsible for processing data of the core network and mapping a flow to a bearer. The PDCP-U is responsible for data encryption and decryption, integrity protection, header compression, sequence number maintenance, data transmission, and the like on a data plane. The CU-CP is connected to the CU-UP through an E1 interface. The CU-CP indicates that a gNB is connected to the core network through an NG interface. The CU-CP is connected to the DU through an F1 interface control plane, namely, F1-C. The CU-UP is connected to the DU through an F1 interface user plane, namely, F1-U. Certainly, in another possible implementation, the PDCP-C is alternatively in the CU-UP. For ease of description, the following uses an example in which the radio access network device is a base station for description.

A terminal, which may also be referred to as a terminal device, user equipment (user equipment, UE), a mobile station (mobile station, MS), a mobile terminal (mobile terminal, MT), or the like, is a device that provides voice and/or data connectivity for a user, such as a handheld device or a vehicle-mounted device having a wireless connection function. The terminal may be widely used in various scenarios, for example, a device-to-device (device-to-device, D2D) scenario, a vehicle to everything (vehicle to everything, V2X) communication scenario, a machine-type communication (machine-type communication, MTC) scenario, an internet of things (internet of things, IoT) scenario, a virtual reality scenario, an augmented reality scenario, an industrial control scenario, an autonomous driving scenario, a telemedicine scenario, a smart grid scenario, a smart furniture scenario, a smart office scenario, a smart wearable scenario, a smart transportation scenario, and a smart city scenario. The terminal may be a mobile phone, a tablet computer, a computer with a wireless transceiver function, a wearable device, a vehicle, an uncrewed aerial vehicle, a helicopter, an airplane, a ship, a robot, a robot arm, a smart home device, or the like. A specific technology and a specific device form used by the terminal are not limited in embodiments of this application.

A core network device is a device in a core network (core network, CN) that provides service support for the terminal. Currently, some examples of the core network device are: an access and mobility management function (access and mobility management function, AMF) entity, a session management function (session management function, SMF) entity, a user plane function (user plane function, UPF) entity, and the like, which are not listed one by one herein. The AMF entity may be responsible for access management and mobility management of the terminal. The SMF entity may be responsible for session management, for example, user session establishment. The UPF entity may be a functional entity of a user plane, and is mainly responsible for connecting to an external network. It should be noted that, the entity in this application may also be referred to as a network element or a functional entity. For example, the AMF entity may also be referred to as an AMF network element or an AMF functional entity. For another example, the SMF entity may also be referred to as an SMF network element, an SMF functional entity, or the like.

The base station and the terminal may be fixed or movable. The base station and the terminal may be deployed on land, including an indoor or outdoor scenario, a handheld device or vehicle-mounted scenario; may be deployed on water; or may be deployed on an airplane, a balloon, and an artificial satellite in the air. Application scenarios of the base station and the terminal are not limited in embodiments of this application.

Roles of the base station and the terminal may be relative. For example, a helicopter or an uncrewed aerial vehicle 120i in FIG. 1 may be configured as a mobile base station. For a terminal 120j accessing the radio access network 100 by using 120i, the terminal 120i is the base station. However, for a base station 110a, 120i is the terminal. In other words, 110a and 120i communicate with each other via a radio air interface protocol. Certainly, 110a and 120i may alternatively communicate with each other via an interface protocol between base stations. In this case, for 110a, 120i is also the base station. Therefore, both the base station and the terminal may be collectively referred to as communication apparatuses, 110a and 110b in FIG. 1 may be referred to as communication apparatuses having a base station function, and 120a to 120j in FIG. 1 may be referred to as communication apparatuses having a terminal function.

Communication between the base station and the terminal, base stations and terminals may be performed by using a licensed spectrum, or may be performed by using an unlicensed spectrum, or may be performed by using both a licensed spectrum and an unlicensed spectrum; and may be performed by using a spectrum below 6 gigahertz (gigahertz, GHz), or may be performed by using a spectrum above 6 GHz, or may be performed by using a spectrum below 6 GHz and a spectrum above 6 GHz. A spectrum resource used for wireless communication is not limited in embodiments of this application.

In embodiments of this application, a function of the base station may be performed by a module (for example, a chip) in the base station, or may be performed by a control subsystem including a function of the base station. The control subsystem that includes the function of the base station herein may be a control center in the foregoing application scenarios, such as the smart grid, the industrial control, the smart transportation, and the smart city. A function of the terminal may be performed by a module (for example, a chip or a modem) in the terminal, or may be performed by an apparatus including a function of the terminal.

In this application, the base station sends a downlink signal or downlink information to the terminal, where the downlink information is carried on a downlink channel. The terminal sends an uplink signal or uplink information to the base station, where the uplink information is carried on an uplink channel. To communicate with the base station, the terminal establishes a wireless connection to a cell controlled by the base station. The cell that establishes a wireless connection to the terminal is referred to as a serving cell of the terminal. When communicating with the serving cell, the terminal is further interfered by a neighboring cell signal.

As described in the background, introducing a satellite into the foregoing communication system can greatly improve user experience.

Generally, a higher orbit of the satellite indicates a larger coverage area of the satellite, but a longer communication delay. Satellites may be classified into the following types based on an orbit altitude.

(1) Low earth orbit (low earth orbit, LEO): An orbit altitude ranges from 160 km to 2,000 km.
(2) Middle earth orbit (middle earth orbit, MEO): An orbit altitude ranges from 2,000 km to 35,786 km.
(3) Geostationary earth orbit (geostationary earth orbit, GEO): An orbit altitude is 35,786 km.

The GEO is a geosynchronous earth satellite orbit, and a satellite revolving in this orbit is stationary relative to the ground. The LEO and the MEO are collectively referred to as a non-geostationary earth orbit (non-geostationary earth orbit, NGSO), and satellites revolving in these orbits move at high speeds relative to the ground.

Depending on whether a beam of the satellite moves with the satellite, the NGSO may be further classified into an earth moving cell (earth moving cell) and an earth fixed cell (earth fixed cell). For the earth moving cell, the cell moves relative to the ground, and a direction of a beam of the satellite moves along with the satellite. For the earth fixed cell, the cell is fixed relative to the ground within a period of time, and a satellite antenna may use a beamforming capability of the satellite antenna to fix a beam to an area on the ground within a period of time.

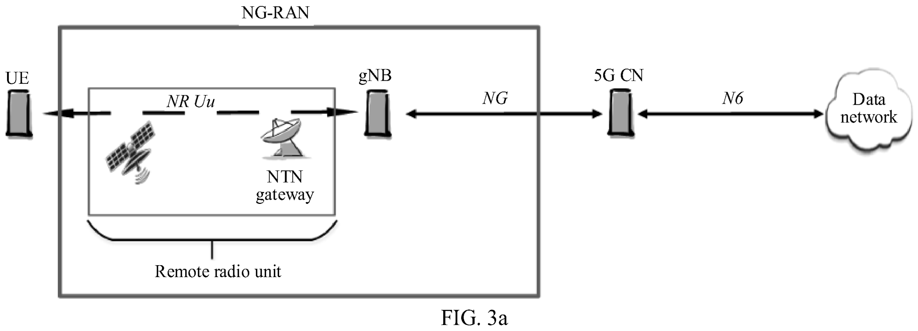

Satellites may generally be classified into two types based on working modes. A first form is a transparent (transparent) forwarding form. A satellite forwards cell information of a terrestrial network device (for example, a base station). FIG. 3a is a diagram of an architecture of a transparent satellite according to an embodiment of this application. The satellite is used for radio frequency filtering and frequency conversion and amplification. In other words, the satellite is mainly used as an L1 relay to regenerate a physical layer signal and does not have other higher protocol layers.

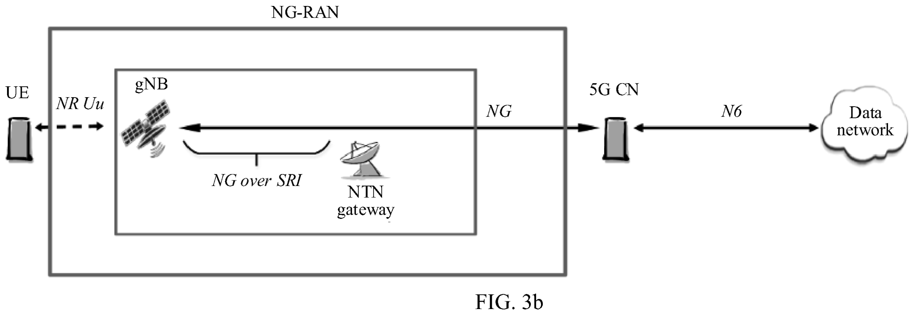

A second form is a regenerative (regenerative) form. A satellite has a processing function of a base station. In the regenerative working mode, the satellites may be further classified into the following types: a regenerative satellite without an inter-satellite link, where for example, FIG. 3b is a diagram of an architecture of a regenerative satellite according to an embodiment of this application, to be specific, there is no inter-satellite link (inter-satellite link, ISL) between satellites; a regenerative satellite with an inter-satellite link, where, to be specific, there is an interface between satellites that may be directly used to exchange data, the inter-satellite link is an Xn interface; and an architecture satellite that merely has a DU processing function of a base station, where the satellite is used as a DU in this scenario.

In a cell selection/reselection process, UE generally selects a target cell based on a measurement result of the UE. The UE performs measurement, including measurement delivery, measurement result generation, and the like. In a cell selection/reselection scenario, the UE performs related measurement based on measurement configuration information delivered by a base station. The measurement configuration information includes a measurement object (including a synchronization signal block (synchronization signal block. SSB) frequency, an SSB subcarrier spacing, an SMTC configuration, a whitelist cell, a blacklist cell, and the like). In a measurement result generation phase, the UE measures a plurality of (at least one) SSB beams of a cell, and combines beam-level measurement results (power values) to export cell quality. Finally, the UE selects a suitable cell to camp on based on the measurement result and a cell selection/reselection criterion. It should be noted that the SMTC and the SSB in this application may alternatively be replaced with other names. This is not limited in this application. For example, the SSB may be referred to as a reference signal, and the SMTC may be referred to as a reference signal measurement timing configuration.

Each cell periodically sends the plurality of SSB beams (that is, SSB beam scanning) in time domain. To ensure that all SSB beams of each cell are accurately and completely measured, the base station delivers a measurement configuration to indicate an SSB frequency that needs to be measured and a time sequence location and duration for starting SSB measurement. In other words, the UE indicates a time window for searching for the SSB, and the time window is configured by using the SMTC. Configuring the SMTC may effectively indicate the time window in which the UE searches for the SSB, to reduce unnecessary power consumption of measurement performed by the UE.

The SMTC indicates a time sequence configuration delivered by the base station to the UE when the UE performs SSB-based measurement on a neighboring cell. The time sequence configuration includes an SMTC periodicity (periodicity), SMTC duration (duration), and an SMTC offset (offset). For example, the SMTC configuration is given by SMTC1, and a configuration information element corresponding to SMTC1 is an SSB-MTC, which includes two sub-information elements: periodicityAndOffset and duration.

periodicityAndOffset indicates the SMTC periodicity (which represents a repetition periodicity of a measurement action or a periodicity of an SMTC measurement window) and the SMTC offset (which is used to determine the measurement window, for example, may be a start subframe of a time window in which the UE searches for the SSB in a periodicity).
duration indicates the SMTC duration (which represents duration of the measurement action since the measurement action starts).

Generally, the UE uses timing of a current serving cell as a reference to determine a window in which the UE searches for an SSB of the neighboring cell.

For example, the UE determines, based on the following formula, a radio frame number (system frame number, SFN) and a subframe (subframe) number of the current serving cell corresponding to a first subframe of the measurement window:

$$\text{SFN mod } T = (\text{FLOOR (SMTC offset/10)})$$

If the SMTC periodicity exceeds five subframes, subframe=SMTC offset mod 10, otherwise, subframe=SMTC offset or (SMTC offset+5).
T=CEIL (SMTC periodicity/10), where CEIL() is rounded up.

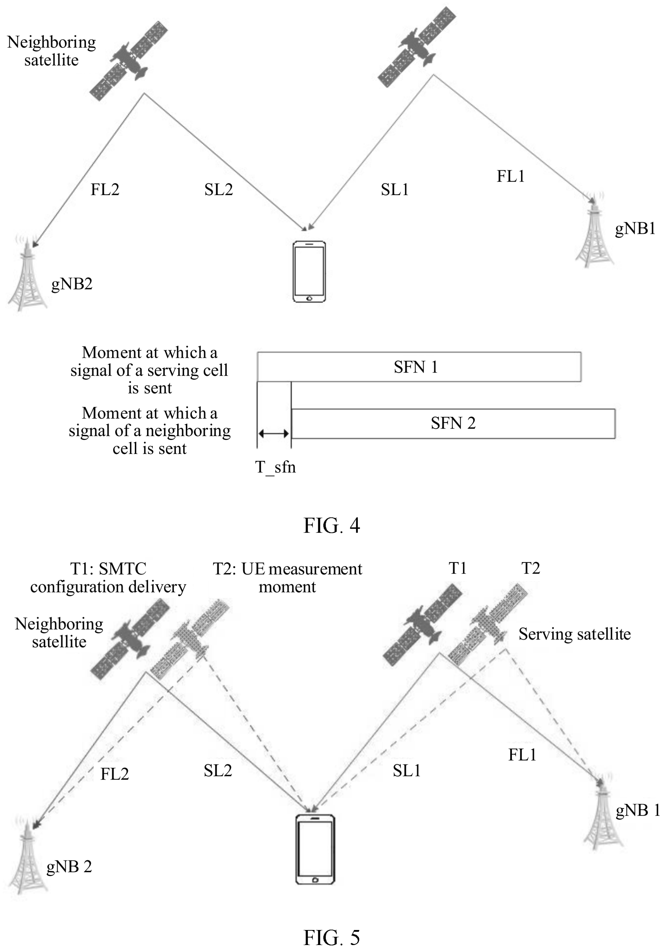

For an NTN, a cell covers a large area, which is usually dozens of to hundreds of kilometers. Therefore, a propagation distance from the UE to the serving cell and a propagation distance from the UE to the neighboring cell also differ greatly. To configure a suitable SMTC for the UE so that the UE can measure more neighboring cell signals, SMTC4list is introduced in R17 to enhance the SMTC configuration of the NTN. An information element corresponding to SMTC4list is one or more SSB-MTC4s. SSB-MTC4 includes two sub-information elements: *pci-List* and *Offset.* In other words, the base station may configure a plurality of SMTCs for the UE. Different cells may correspond to different offsets in the SMTCs. The UE may use the plurality of SMTCs to perform measurement at a same time. If the base station configures SMTC4list for the UE, the UE establishes additional SMTCs in addition to establishing the SMTC corresponding to SMTC1. Periodicities and duration of these additional SMTCs are the same as those configured for SMTC1, and offsets are an offset value carried in SMTC4list. A maximum of four SMTCs may be configured at a measurement frequency. Offsets of different SMTCs at a same frequency are different. FIG. 4 is a diagram of an NTN SMTC configuration according to an embodiment of this application. An NTN SMTC configuration method is as follows.

UE receives SMTC configuration information in an SIB message and obtains an offset from the SMTC configuration information. The offset includes a propagation delay difference between a part of or an entire feeder link (feeder link, FL) of a serving cell and of a neighboring cell. Optionally, a timing difference T_sfn between signal sending of the serving cell and signal sending of the neighboring cell may further be included. The offset received from a base station does not include a service link propagation delay difference between the serving cell and the neighboring cell (that is, it is assumed that the service link propagation delay difference between the serving cell and the neighboring cell is 0). This may also be referred to as that a value of the offset in the SMTC configuration information sent by the base station to the UE is obtained based on a case in which the base station considers the propagation delay difference between a part of or the entire feeder link of the serving cell and of the neighboring cell. Optionally, the timing difference between the signal sending of the serving cell and the signal sending of the neighboring cell may further be considered. The service link propagation delay difference between the serving cell and the neighboring cell is not considered. This may also be referred to as that the value of the offset in the SMTC configuration information sent by the base station to the UE is related to the propagation delay difference between a part of or the entire feeder link of the serving cell and of the neighboring cell and the timing difference between the signal sending of the serving cell and the signal sending of the neighboring cell, and is irrelevant to the service link propagation delay difference between the serving cell and the neighboring cell.

Then, the UE calculates the service link (service link, SL) propagation delay difference, and obtains a final offset based on the service link propagation delay difference and the offset received from the SIB, that is, obtains the final offset based on an actual propagation delay.

In other words, from the perspective of the UE, wireless timing differences between the serving cell and the neighboring cell are divided into three parts: the service link propagation delay difference, the feeder link propagation delay difference, and the timing difference between the signal sending of the serving cell and the signal sending of the neighboring cell. The feeder link propagation delay difference between the serving cell and the neighboring cell and the timing difference between the signal sending of the serving cell and the signal sending of the neighboring cell are considered when the base station delivers the offset to the UE, and the service link propagation delay difference is calculated by the UE.

In FIG. 4, SL1 is a service link propagation delay of the serving cell, SL2 is a service link propagation delay of the neighboring cell, FL1 is a feeder link propagation delay of the serving cell, and FL2 is a feeder link propagation delay of the neighboring cell.

FIG. 5 is a diagram of an example of SMTC configuration expiration caused by satellite movement according to an embodiment of this application. Because UE may perform corresponding measurement only after a period of time since a base station delivers an SMTC configuration, an offset used by the UE has an expiration problem. For example, as shown in FIG. 5, the base station delivers the SMTC configuration to the UE at a moment T1. In this case, a feeder link propagation delay difference included in the delivered offset corresponds to the moment T1. The UE determines, based on the offset delivered by the base station at the moment T1, a time window for receiving an SSB only when the UE performs measurement at a moment T2. However, due to the satellite movement, the feeder link propagation delay difference may have changed at the moment T2. If the offset delivered at the moment T1 is still used, the SMTC configuration may be inaccurate, and consequently, a signal of a to-be-measured neighboring cell cannot be received. Alternatively, it may be understood as that SMTC configuration information delivered by the base station only indicates a value of the offset, but does not indicate a specific moment at which the base station considers a feeder link propagation delay difference between a serving cell and a neighboring cell when configuring the offset. Due to the satellite movement, when the UE performs measurement at the moment T2, the UE cannot know a difference between the feeder link propagation delay difference considered in the offset configured by the base station and the feeder link propagation delay difference at the moment T2. As a result, an offset that should be used at the moment T2 cannot be obtained correctly, and a signal of a to-be-measured neighboring cell cannot be received. Alternatively, it is understood as that when setting a value of the offset, the base station does not consider a feeder link propagation delay difference between a serving cell and a neighboring cell at a moment at which the base station sends the offset. When the UE performs measurement at the moment T2, the UE cannot know a difference between the feeder link propagation delay difference considered in the offset configured by the base station and the feeder link propagation delay difference at the moment T2. As a result, an offset that should be used at the moment T2 cannot be obtained correctly, and a signal of a to-be-measured neighboring cell cannot be received. In addition, if the base station considers a feeder link propagation delay difference between the serving cell and the neighboring cell at a current sending moment each time when sending the offset, the base station needs to update a value of the offset in the SMTC configuration each time when sending the offset. If the SMTC configuration is carried in an SIB message, the base station needs to frequently page the UE to notify the UE to re-obtain a value of the offset in the SMTC configuration in the SIB message.

Therefore, an embodiment of this application provides a communication solution. After receiving a first offset at a first moment, a terminal adjusts the first offset at the first moment based on the first offset at the first moment and a first propagation delay difference that corresponds to the first moment and that is between a feeder link of a serving cell and that of a neighboring cell, to obtain a second offset at a second moment. Therefore, an accurate offset may be obtained, and accuracy of neighboring cell measurement is improved. For example, the first moment is a moment at which a base station configures an SMTC or a moment at which a base station delivers an SMTC, and the second moment is a moment at which a terminal device performs measurement.

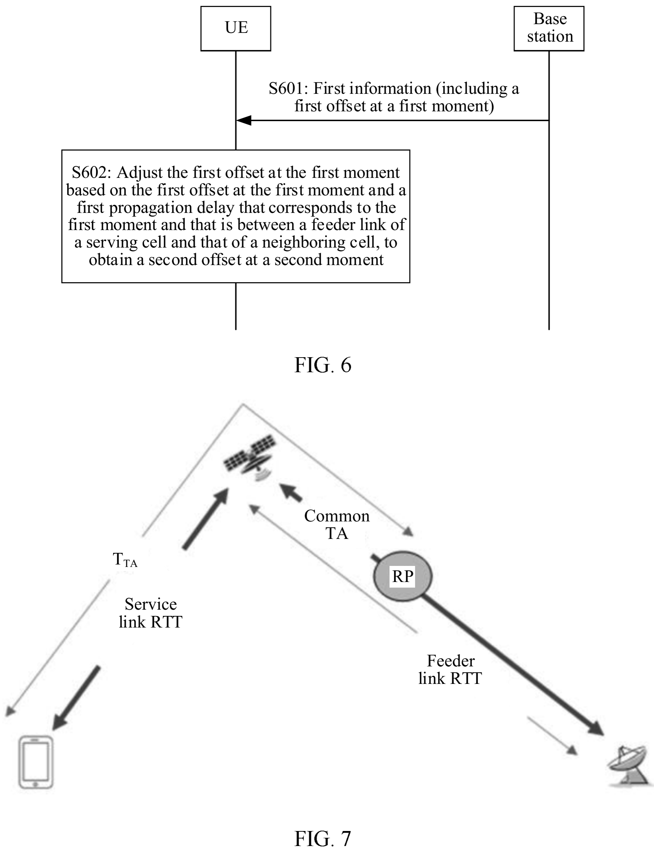

FIG. 6 is a schematic flowchart of a communication method according to an embodiment of this application. For example, the method may include the following steps.

S601: A base station sends first information.

Correspondingly, UE receives the first information.

The first information includes a first offset at a first moment T1 (offset_T1). The offset_T1 is used to determine a measurement window.

The first offset may be the offset carried in SMTC1 or SMTC4list described above. To be specific, the first offset is a corresponding offset in the SMTC configuration which the base station notifies the UE of.

The offset_T1 includes a propagation delay difference between a part of or an entire feeder link (feeder link, FL) of a serving cell and of a neighboring cell. Optionally, a timing difference T_sfn between signal sending of the serving cell and signal sending of the neighboring cell may further be included. The offset_T1 received from the base station does not include a service link propagation delay difference between the serving cell and the neighboring cell (that is, it is assumed that the service link propagation delay difference between the serving cell and the neighboring cell is 0). This may also be referred to as that a value of the offset in SMTC configuration information sent by the base station to the UE is obtained based on a case in which the base station considers the propagation delay difference between a part of or the entire feeder link of the serving cell and of the neighboring cell. Optionally, the timing difference between the signal sending of the serving cell and the signal sending of the neighboring cell may further be considered. The service link propagation delay difference between the serving cell and the neighboring cell is not considered. This may also be referred to as that the value of the offset in the SMTC configuration information sent by the base station to the UE is related to the propagation delay difference between a part of or the entire feeder link of the serving cell and of the neighboring cell and the timing difference between the signal sending of the serving cell and the signal sending of the neighboring cell, and is irrelevant to the service link propagation delay difference between the serving cell and the neighboring cell.

The propagation delay difference between a part of or the entire feeder link of the serving cell and of the neighboring cell refers to a feeder link common timing advance difference between the serving cell and the neighboring cell, or a feeder link difference $K_{mac}$ between the serving cell and the neighboring cell. For meanings of a common timing advance difference and $K_{mac}$, refer to the following steps.

For example, the first moment is a moment corresponding to the first offset. For example, the first offset includes the propagation delay difference between a part of or the entire feeder link of the serving cell and of the neighboring cell at the first moment, or the first offset considers the propagation delay difference between a part of or the entire feeder link of the serving cell and of the neighboring cell at the first moment, or a value of the first offset is related to the propagation delay difference between a part of or the entire feeder link of the serving cell and of the neighboring cell.

For example, the first information may be an SIB2/SIB4.

S602: The UE adjusts the first offset at the first moment based on the first offset at the first moment and a first propagation delay difference that corresponds to the first moment and that is between the feeder link of the serving cell and that of the neighboring cell, to obtain a second offset at a second moment.

It should be noted that, in S602, it is emphasized that the UE determines the second offset at the second moment based on the first propagation delay difference corresponding to the first moment. Equivalently, it may alternatively be expressed as that the UE adjusts the second offset at the second moment based on the first offset at the first moment and the first propagation delay difference that corresponds to the first moment and that is between the feeder link of the serving cell and that of the neighboring cell. It may alternatively be expressed as that the UE may obtain an actual offset (that is, an offset used at the second moment) based on an actual propagation delay difference (that is, a propagation delay at the second moment, where the propagation delay herein includes a delay of the entire feeder link and a service link propagation delay), the first offset at the first moment, and the first propagation delay difference that corresponds to the first moment and that is between the feeder link of the serving cell and that of the neighboring cell. It may alternatively be expressed as that the UE obtains the second offset at the second moment based on the first offset at the first moment, the first propagation delay difference that corresponds to the first moment and that is between the feeder link of the serving cell and that of the neighboring cell, and a service link delay difference that corresponds to the second moment and that is between the serving cell and the neighboring cell.

The UE may perform measurement after a period of time since the UE receives the offset_T1 at the first moment. In this period, a satellite moves, and the first propagation delay difference between the feeder links has changed. If the UE still performs measurement based on the offset_T1 at the first moment, a signal of a to-be-measured neighboring cell may not be received. Alternatively, if the UE does not know the moment T1 considered for the received offset, the UE cannot accurately obtain an offset needed by actual measurement at a moment T2, and a signal of a to-be-measured neighboring cell may not be received. Therefore, when determining a time window for receiving an SSB, the UE needs to adjust the offset_T1.

FIG. 7 is a diagram of an example of a feeder link propagation delay in an NTN according to an embodiment of this application. Feeder link propagation delays include two parts: a common timing advance (common timing advance, CommonTA), indicating a propagation delay between a satellite and an uplink synchronization reference point (reference point. RP), and a propagation delay between an RP and a base station or an NTN gateway (gateway), which is represented by $K_{mac}$. If the base station has compensated for the propagation delay between the RP and the base station or the NTN gateway when configuring the offset_T1, the first propagation delay difference is a CommonTA difference between the serving cell and the neighboring cell. If the base station does not compensate for, include, or consider the propagation delay between the RP and the base station or the NTN gateway when configuring the offset_T1, the first propagation delay difference is a propagation delay difference between each of a satellite of the serving cell and a satellite of the neighboring cell and a respective base station or NTN gateway, that is, a delay difference between a feeder link corresponding to the serving cell and a feeder link corresponding to the neighboring cell, including a difference between CommonTA and $K_{mac}$. The base station notifies the serving cell and the neighboring cell that correspond to the UE of $K_{mac}$ separately corresponding to the serving cell and the neighboring cell, for example, indicates $K_{mac}$ in an SIB19. In this application, compensation may also be referred to as inclusion or consideration.

For example, the offset_T1 includes the first propagation delay difference that corresponds to the first moment and that is between the serving cell and the neighboring cell, and the timing difference T_sfn between the signal sending of the serving cell and the signal sending of the neighboring cell, which means that a sum of the first propagation delay difference that corresponds to the first moment and that is between the serving cell and the neighboring cell and the timing difference T_sfn between the signal sending of the serving cell and the signal sending of the neighboring cell is included. Therefore, when the UE needs to adjust or determine the second offset at the second moment, the UE needs to additionally obtain the first propagation delay difference that corresponds to the first moment and that is between the serving cell and the neighboring cell.

In an implementation, that the UE obtains the first propagation delay difference corresponding to the first moment may be that the UE obtains the first moment, and receives second information, where the second information includes a feeder link related parameter, and the feeder link related parameter includes $K_{mac}$ or/and a related parameter of CommonTA: and determines, based on the first moment and the feeder link related parameter, the first propagation delay difference corresponding to the first moment. The feeder link related parameter includes related feeder link parameters of the serving cell and the neighboring cell.

For example, the base station may send the first moment to the UE. For example, the base station may deliver the first moment and the offset_T1 to the UE at a same time, in other words. T1 may be carried in the first information (for example, the SIB2/SIB4) and delivered to the UE.

For example, the UE may alternatively use an end moment of a system information window (SI window) of the first information (for example, the SIB2/SIB4) as the first moment, or if the UE does not receive an indication of the first moment, the UE uses an end moment of a system information window (SI window) of the first information as the first moment.

The first moment may be indicated by a system frame number (system frame number, SFN) or/and a subframe number, for example, is a start moment corresponding to the system frame number or/and the subframe number; or the first moment may be indicated by coordinated universal time (coordinated universal time, UTC) time.

For example, the first moment may alternatively be a reference time ($t_{epoch}$), where the reference time is a reference time of ephemeris information and CommonTA. The reference time may be carried in the SIB19. The reference time may be indicated by a system frame number (system frame number, SFN) or/and a subframe number, for example, a start moment corresponding to the system frame number or/and the subframe number; or the reference time is an end moment of a system information window (SI window) of the SIB19.

The related parameter of CommonTA includes at least one of the following parameters: $TA_{Common}$, $TA_{CommonDrift}$, and $TA_{CommonDriftVariant}$. These parameters may be delivered by the base station to the UE through an SIB19 message.

If the base station compensates for, includes or considers $K_{mac}$ when configuring the offset_T1, the UE does not need to consider $K_{mac}$ when determining, based on the first moment and the related parameter of CommonTA, the first propagation delay difference corresponding to the first moment, where the first propagation delay difference is a CommonTA difference between the serving cell and the neighboring cell. If the base station does not compensate for $K_{mac}$ when configuring the offset_T1. the UE needs to consider $K_{mac}$ when determining, based on the first moment and the related parameter of CommonTA, the first propagation delay difference corresponding to the first moment, where the first propagation delay difference is a feeder link propagation delay difference.

CommonTA of the serving cell or the neighboring cell may be calculated by using the following formula:

$$\text{Delay}_{\text{common}}(t) = \frac{TA_{\text{Common}}}{2} + \frac{TA_{\text{CommonDrift}}}{2} \times (t - t_{\text{epoch}}) + \frac{TA_{\text{CommonDriftVariant}}}{2} \times (t - t_{\text{epoch}})^2$$

t is CommonTA corresponding to a moment that needs to be calculated currently, for example, the first moment T1.

After CommonTA of the serving cell and CommonTA of the neighboring cell are separately calculated, a difference between CommonTA of the neighboring cell and CommonTA of the serving cell, that is, the CommonTA difference, may be obtained. For example, the CommonTA difference between the serving cell and the neighboring cell is CommonTA of the neighboring cell minus CommonTA of the serving cell, or is CommonTA of the serving cell minus CommonTA of the neighboring cell.

The propagation delay between the RP and the base station or the NTN gateway is calculated based on $K_{mac}$, and $K_{mac}$ is delivered by the base station, for example, may be carried in the SIB19. For example, a propagation delay represented by $K_{mac}$ is slot (slot) duration corresponding to $K_{mac}$ subcarrier spacings of 15 kHz. Specifically, a propagation delay corresponding to $K_{mac}$ is Delay_kmac=2^u*Kmac slots, and a slot length is a slot length corresponding to a subcarrier spacing of u=0 (that is, the subcarrier spacing is 15 kHz). u is a parameter corresponding to the subcarrier spacing. For example, u=0 corresponds to a subcarrier spacing of 15 kHz, and u=1 corresponds to a subcarrier spacing of 30 kHz.

In another implementation, that the UE obtains the first propagation delay difference may be that the UE obtains the first moment, and determines the first propagation delay difference based on ephemeris information of the serving cell and ephemeris information of the neighboring cell.

In another implementation, the first propagation delay difference corresponding to the first moment is carried in the first information. To be specific, the base station may deliver the first propagation delay difference that corresponds to the first moment and that is between the feeder link of the serving cell and that of the neighboring cell to the UE. For example, the first propagation delay difference may be carried in an SIB2/SIB4.

Alternatively, the base station may deliver, to the UE, a first propagation delay in the feeder link that corresponds to the first moment and that is of the serving cell and a first propagation delay in the feeder link that corresponds to the first moment and that is of the neighboring cell. Accordingly, the UE calculates the first propagation delay difference that corresponds to the first moment and that is between the feeder link of the serving cell and that of the neighboring cell.

After receiving the offset_T1 at the first moment and obtaining the first propagation delay difference that corresponds to the first moment and that is between the feeder link of the serving cell and that of the neighboring cell, the UE may determine the second offset offset_T2 at the second moment based on the offset_T1 at the first moment and the first propagation delay difference that corresponds to the first moment and that is between the feeder link of the serving cell and that of the neighboring cell, where impact of satellite movement is considered for the determined offset_T2. For example, the offset_T2 may be obtained by adjusting the offset_T1 at the first moment. Equivalently, it may alternatively be expressed as that the offset_T2 may be obtained by compensating for a change of the feeder link propagation delay difference caused by the satellite movement. For example, the offset_T2 at the second moment is determined based on the following formula:

$$offset\_T2 = (SL2\_T2 - SL1\_T2) + (FL2\_T2 - FL1\_T2) + (FL2\_T1 - FL1\_T1 + T\_sfn) - (FL2\_T1 - FL1\_T1)$$

or

$$offset\_T2 = -((SL2\_T2 - SL1\_T2) + (FL2\_T2 - FL1\_T2) + (FL2\_T1 - FL1\_T1 + T\_sfn) - (FL2\_T1 - FL1\_T1))$$

*offset_T2* is an offset at the second moment T2, *SL2_T2* is a service link propagation delay of the neighboring cell at the second moment, *SL1_T2* is a service link propagation delay of the serving cell at the second moment, *FL2_T2* is a feeder link propagation delay of the neighboring cell at the second moment, *FL1_T2* is a feeder link propagation delay of the serving cell at the second moment, and *T_sfn* is a timing difference between signal sending of the serving cell and signal sending of the neighboring cell (or referred to as a frame delay offset between the serving cell and the neighboring cell). The second moment is a moment at which the UE starts to measure a neighboring cell signal.

In the foregoing formula, *SL2_T2-SL1_T2* represents a service link propagation delay difference that corresponds to the second moment and that is between the serving cell and the neighboring cell, and may be obtained by the UE through calculation. For example, the UE may determine locations of satellites of the serving cell and the neighboring cell based on the ephemeris information of the serving cell and the ephemeris information of the neighboring cell at the second moment, and then calculate the service link propagation delay difference between the serving cell and the neighboring cell with reference to a location of the UE.

*FL2_T2-FL1_T2* represents a feeder link propagation delay difference that corresponds to the second moment and that is between the serving cell and the neighboring cell. The calculation method is as described above.

*FL2_T1-FL1_T1+T_sfn* represents the offset_T1 received by the UE from the base station. This part includes the first propagation delay difference that corresponds to the first moment and that is between the feeder link of the serving cell and that of the neighboring cell and the frame delay offset.

*FL2_T1-FL1_T1* represents the propagation delay difference that corresponds to the first moment and that is between a part of or the entire feeder link of the serving cell and of the neighboring cell. The calculation method is as described above. When the base station configures the offset_T1, $K_{mac}$ may be compensated, or $K_{mac}$ may not be compensated. If the base station does not compensate for $K_{mac}$, a propagation delay difference corresponding to $K_{mac}$ is added to *FL2_T1-FL1_T1*.

The UE adjusts the offset_T1 at the first moment to obtain the offset_T2 at the second moment. Therefore, an accurate offset may be obtained, and measurement accuracy is improved.

Further, a specified time difference (or referred to as valid time) may be set, for example, Delta T1. If the UE configures measurement within the time Delta T1 after receiving the offset_T1 (in other words, a time difference between the second moment and the first moment does not exceed the specified time difference), it may be considered that a change of the offset_T1 caused by the satellite movement is small. Therefore, the offset_T1 delivered by the base station may be directly used to calculate an SMTC offset, and the foregoing adjustment does not need to be performed on the offset_T1. Otherwise, if the time difference between the second moment and the first moment exceeds the specified time difference, the foregoing adjustment needs to be performed.

In an implementation, the specified time difference may be delivered by the base station to the UE together with the offset_T1, in other words, the specified time difference is carried in the first information.

In another implementation, the specified time difference may alternatively be pre-negotiated by the base station and the UE.

In still another implementation, the UE may alternatively maintain a timer, for example, Time0, where timing duration of Time0 is the specified time difference. Time0 is started at a subframe indicated by T1. If Time0 does not expire when the UE starts measurement, it may be considered that a change of the offset_T1 caused by the satellite movement is small. Therefore, the offset_T1 at the first moment delivered by the base station may be directly used to calculate an SMTC offset, and the foregoing adjustment does not need to be performed on the offset_T1 at the first moment. Otherwise, the foregoing adjustment needs to be performed on the offset_T1.

Further, valid time Delta T2 may alternatively be set for the offset_T1 at the first moment. If the UE configures measurement within the time Delta T2 after receiving the offset_T1 at the first moment, the UE may adjust the offset_T1 by using the foregoing method; otherwise, it is considered that the offset_T1 at the first moment expires, in other words, the offset_T1 at the first moment is unavailable and cannot be used to adjust and obtain the offset_T2 at the second moment. In this case, the UE may re-request the offset_T1; or the base station reconfigures the offset_T1 after the offset_T1 expires and delivers the offset_T1 to the UE.

Further, if the UE is handed over after receiving the offset_T1 (including that the UE changes a satellite or a feeder link of the satellite changes), the offset_T1 is unavailable. In this case, the UE may also request the base station to re-deliver the offset_T1, or the base station actively re-delivers the offset_T1 after the UE is handed over.

Further, if an ephemeris changes after the base station sends the offset_T1 at the first moment, the base station recalculates a propagation delay difference between the serving cell and the neighboring cell, and re-delivers the propagation delay difference to the UE.

Optionally, if the ephemeris changes after the base station sends the offset_T1 at the first moment, the base station recalculates the offset_T1 and re-delivers the offset_T1 to the UE.

According to the communication method provided in this embodiment of this application, after receiving the first offset at the first moment, the terminal adjusts the first offset at the first moment based on the first offset at the first moment and the first propagation delay difference that corresponds to the first moment and that is between the feeder link of the serving cell and that of the neighboring cell, to obtain the second offset at the second moment. Therefore, an accurate offset may be obtained, and accuracy of neighboring cell measurement is improved.

In a conventional technology, a neighboring cell base station sends SMTC configuration information to a serving base station, and specifies that a configuration time sequence of an SMTC configuration uses a time sequence of a sender (that is, the neighboring cell base station) as a reference. An offset in the SMTC configuration information is used to determine a moment at which a neighboring cell sends an SSB. For example, the moment for sending the SSB may be a start subframe, and the time sequence of the neighboring cell base station is used as a reference for the start subframe.

However, a moment at which the neighboring cell base station configures an offset is different from a moment at which the serving base station configures an offset. In other words, the serving base station configures the offset delivered to the UE only after a period of time since the serving base station receives the SMTC configuration from the neighboring cell base station. During a period from time at which the neighboring cell base station configures the offset to time at which the serving base station configures the offset, a feeder link propagation delay of the neighboring cell may have changed due to satellite movement. Therefore, the offset from the neighboring cell base station needs to be corrected.

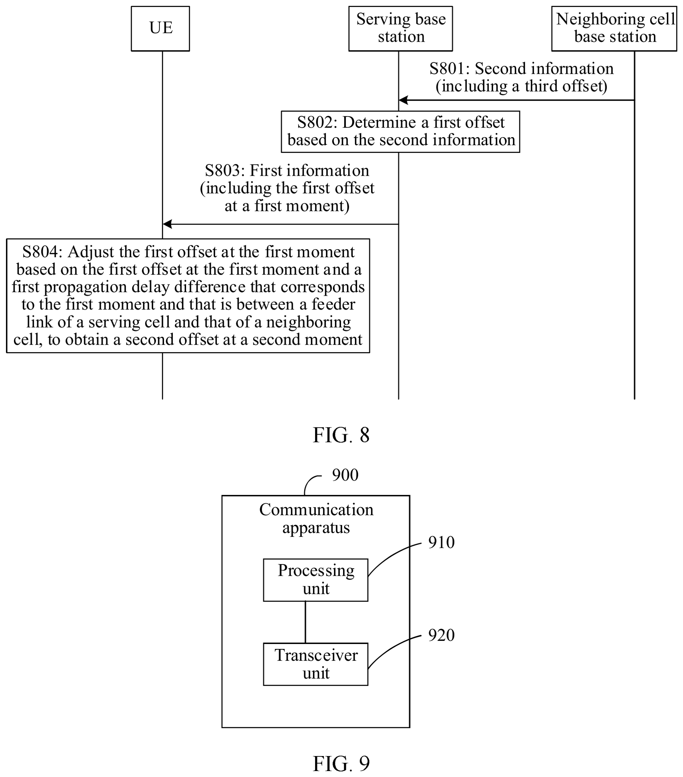

FIG. 8 is a schematic flowchart of another communication method according to an embodiment of this application. For example, the method may include the following steps.

S801: A neighboring cell base station sends second information to a serving base station.

Correspondingly, the serving base station receives the second information from the neighboring cell base station.

The second information includes a third offset (offset_T3). Optionally, different cells in a same neighboring cell base station may correspond to a same third offset, or may correspond to different third offsets. Further, the second information may include a cell identity.

In an implementation, the third offset is based on a first propagation delay in a feeder link of a neighboring cell, where the first propagation delay is a propagation delay of a part of or the entire feeder link corresponding to the neighboring cell. It may also be referred to as that the third offset includes, considers, or compensates for the first propagation delay. The second information may further include a third moment. The third moment is a moment corresponding to the third offset. The third offset is an offset corresponding to the third moment T3. The third moment is a moment at which the neighboring cell base station configures the third offset, or the neighboring cell base station considers feeder link related information at the third moment when configuring the third offset. That the third offset is based on the first propagation delay in the feeder link of the neighboring cell may also be referred to as that a value of the third offset is related to the first propagation delay in the feeder link of the neighboring cell. The propagation delay of a part of the feeder link may be common TA or Kmac in the feeder link.

For example, the third moment may be UTC time or a system frame number and/or a subframe number corresponding to a cell of the neighboring cell base station.

In another implementation, the third offset is based on a first propagation delay in a feeder link of a neighboring cell. A meaning of the first propagation delay is the same as that described above. The second information includes the first propagation delay.

In another implementation, the third offset is not based on a first propagation delay in a feeder link of a neighboring cell, in other words, the third offset does not include, consider, or compensate for a feeder link propagation delay.

In an implementation, the third offset is based on a difference between a first propagation delay in a feeder link of a neighboring cell and a first propagation delay in a feeder link of a serving cell of the serving base station. A specific meaning of the first propagation delay is the same as that described above. It may also be referred to as that the third offset includes, considers, or compensates for a difference between the first propagation delay of the neighboring cell and the first propagation delay of the serving cell. The second information may further include a third moment. The third moment is a moment corresponding to the third offset. The third offset is an offset corresponding to the third moment T3. The third moment is a moment at which the neighboring cell base station configures the third offset, or the neighboring cell base station considers feeder link related information at the third moment when configuring the third offset. That the third offset is based on the difference between the first propagation delay in the feeder link of the neighboring cell and the first propagation delay in the feeder link of the serving cell of the serving base station may also be referred to as that the third offset is related to the difference between the first propagation delay in the feeder link of the neighboring cell and the first propagation delay in the feeder link of the serving cell of the serving base station.

S802: The serving base station determines a first offset based on the second information.

Specifically, depending on whether the neighboring cell base station configures the offset_T3 based on the first propagation delay in the feeder link of the neighboring cell, that the serving base station determines the first offset based on the second information may be classified into the following two cases.

In an implementation, the first propagation delay is included when the neighboring cell base station configures the offset_T3. In this case, when configuring an SMTC (that is, configuring the first offset in the SMTC), the serving base station needs to correct the offset_T3. A moment at which the neighboring cell base station configures the offset_T3 is different from a moment at which the serving base station configures an offset (that is, configuring the first offset in the SMTC). During a period from time at which the neighboring cell base station configures the offset_T3 to time at which the serving base station configures the offset, the feeder link propagation delay of the neighboring cell may have changed due to satellite movement. In addition, the neighboring cell base station configures the offset_T3 by using timing of the neighboring cell as a reference, and the serving base station configures the offset by using timing of the neighboring cell as a reference. Therefore, the offset_T3 needs to be corrected.

Equivalently, the serving base station needs to correct the offset_T3 when configuring the SMTC, which may alternatively be expressed as that the serving base station compensates for a change of the feeder link propagation delay caused by the satellite movement when configuring the SMTC.

For example, the second information carries the time T3 corresponding to the offset_T3, and the serving base station adjusts the offset _T3 based on the T3 when configuring the offset. For example, the serving base station determines a feeder link propagation delay FL2_T3 of the neighboring cell at the moment T3 based on the T3 and feeder link information of the neighboring cell, and determines a feeder link propagation delay FL2_T1 of the neighboring cell at a moment T1 based on the feeder link information of the neighboring cell. Further, the offset_T3 may be corrected by subtracting the feeder link propagation delay FL2_T3 of the neighboring cell at the moment T3 from the received offset_T3 of the neighboring cell, and then adding the feeder link propagation delay FL2_T1 of the neighboring cell at a current moment (T1). The corrected offset_T3 compensates for the change of the feeder link propagation delay caused by the satellite movement. Then, the serving base station determines an offset delivered to UE based on the corrected offset of the neighboring cell. The feeder link information may include a related parameter of commonTA and Kmac.

For example, the second information carries the first propagation delay corresponding to the offset_T3. The serving base station adjusts the offset_T3 based on the first propagation delay corresponding to the offset_T3, the offset_T3, and the first propagation delay corresponding to the neighboring cell at the moment at which the serving base station configures the offset, to obtain an offset that needs to be configured by the serving base station. For example, valid time Delta T3 may be specified for the offset_T3. If the serving base station configures an offset within the time Delta T3 after receiving the offset_T3, it may be considered that a change of the offset caused by the satellite movement is small, and the offset_T3 exchanged by the neighboring cell base station does not need to be corrected.

For example, valid time Delta T4 may be specified for the offset_T3. If the serving base station does not configure an offset within the time Delta T4 after receiving the offset_T3, it is considered that the offset_T3 is unavailable, and the offset_T3 exchanged by the neighboring cell base station does not need to be corrected. The base station may re-request the offset, or the neighboring cell base station re-determines the SMTC configuration and exchanges the offset or the SMTC configuration with the serving base station.

For example, if an ephemeris changes after the neighboring cell base station sends the offset_T3, the neighboring cell base station recalculates the offset and exchanges the offset with the serving base station.

In another implementation, the base station does not consider the feeder link propagation delay when configuring the offset. In this case, the serving base station needs to compensate for the feeder link propagation delay when configuring an SMTC. Specifically, when configuring an offset _T1, the serving base station calculates a feeder link propagation delay between the serving cell and the neighboring cell based on feeder link information of the neighboring cell, and then determines the offset_T1 based on the feeder link propagation delay between the serving cell and the neighboring cell.

The base station needs the feeder link information of the neighboring cell when calculating the feeder link delay difference of the neighboring cell. In this embodiment, the serving base station may obtain the feeder link information of the neighboring cell, for example, obtain the feeder link information through operations, administration, and maintenance (operations, administration, and maintenance, OAM).

In addition, when calculating the offset, the base station further needs to consider a timing difference between the serving cell and the neighboring cell. In this embodiment, the serving base station may obtain the timing difference (which may alternatively be expressed as a frame offset) between the serving cell and the neighboring cell, for example, obtain the timing difference through operations, administration, and maintenance (operations, administration, and maintenance, OAM).

It should be noted that depending on whether a propagation delay (for example, which may be represented by Kmac) between an RP and the base station is included when the base station configures the offset, the offset needs to be adjusted as follows.

If Kmac is included when the base station determines the offset, the serving base station does not need to consider the propagation delay between the RP and the base station when determining the offset_T1 delivered to the UE.

If Kmac is not included when the base station determines the offset, the serving base station needs to include a propagation delay corresponding to Kmac of the serving cell and a propagation delay corresponding to Kmac of the neighboring cell when determining the offset_T1 delivered to the UE.

S803: The serving base station sends first information.

Correspondingly, the UE receives the first information.

After obtaining the first offset (offset_T1) at the first moment T1, the serving base station sends the first information to the UE. The first information includes the offset_T1.

For a specific implementation of this step, refer to step S601 in the foregoing embodiment.

S804: The UE adjusts the first offset at the first moment based on the first offset at the first moment and the first propagation delay difference that corresponds to the first moment and that is between the feeder link of the serving cell and that of the neighboring cell, to obtain a second offset at a second moment.

For a specific implementation of this step, refer to step S602 in the foregoing embodiment.

Step S804 is optional, and the UE may alternatively obtain the second offset at the second moment according to another method.

According to the communication method provided in this embodiment of this application, manners of determining the first offset by the serving base station in different scenarios are specified, thereby improving accuracy of the first offset.

After receiving the first offset at the first moment, the terminal adjusts the first offset at the first moment based on the first offset at the first moment and the first propagation delay difference that corresponds to the first moment and that is between the feeder link of the serving cell and that of the neighboring cell, to obtain the second offset at the second moment. Therefore, an accurate offset may be obtained, and accuracy of neighboring cell measurement is improved.

It may be understood that, to implement functions in the foregoing embodiments, the network device and the terminal include corresponding hardware structures and/or software modules for performing each function. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraint conditions of the technical solutions.

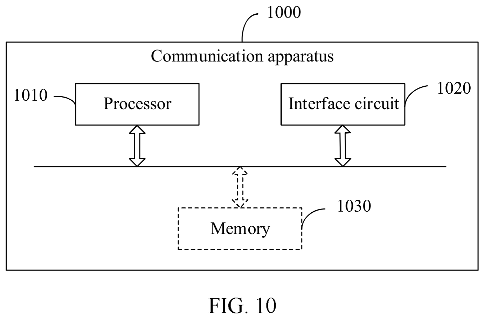

FIG. 9 and FIG. 10 each are a diagram of a structure of a possible communication apparatus according to an embodiment of this application. These communication apparatuses may be configured to implement functions of the terminal or the network device in the foregoing method embodiments. Therefore, beneficial effects of the foregoing method embodiments can also be implemented. In this embodiment of this application, the communication apparatus may be one of the terminals 120a to 120j shown in FIG. 1, or may be the network device 110a or 110b shown in FIG. 1, or may be a module (for example, a chip) used in the terminal or the network device.

As shown in FIG. 9, the communication apparatus 900 includes a processing unit 910 and a transceiver unit 920. The communication apparatus 900 is configured to implement functions of the terminal or the network device in the method embodiment shown in FIG. 6 or FIG. 8.

When the communication apparatus 900 is configured to implement the functions of the terminal in the method embodiment shown in FIG. 6, the processing unit 910 is configured to perform step S602 in the embodiment shown in FIG. 6, and the transceiver unit 920 is configured to perform operations performed by the terminal in step S601 in the embodiment shown in FIG. 6.

When the communication apparatus 900 is configured to implement the functions of the network device in the method embodiment shown in FIG. 6, the transceiver unit 920 is configured to perform operations performed by the base station in step S601 in the embodiment shown in FIG. 6.

When the communication apparatus 900 is configured to implement the functions of the terminal in the method embodiment shown in FIG. 8, the processing unit 910 is configured to perform step S804 in the embodiment shown in FIG. 8, and the transceiver unit 920 is configured to perform operations performed by the terminal in step S803 in the embodiment shown in FIG. 8.

When the communication apparatus 900 is configured to implement the functions of the network device in the method embodiment shown in FIG. 8, the processing unit 910 is configured to perform step S802 in the embodiment shown in FIG. 8, and the transceiver unit 920 is configured to perform operations performed by the serving base station in steps S801 and S803 in the embodiment shown in FIG. 8.

For more detailed descriptions of the processing unit 910 and the transceiver unit 920, directly refer to related descriptions in the method embodiment shown in FIG. 6 or FIG. 8. Details are not described herein again.

As shown in FIG. 10, a communication apparatus 1000 includes a processor 1010 and an interface circuit 1020. The processor 1010 and the interface circuit 1020 are coupled to each other. It may be understood that the interface circuit 1020 may be a transceiver or an input/output interface. Optionally, the communication apparatus 1000 may further include a memory 1030, configured to store instructions executed by the processor 1010, or store input data needed by the processor 1010 to run instructions, or store data generated after the processor 1010 runs instructions.

When the communication apparatus 1000 is configured to implement the method shown in FIG. 6 or FIG. 8, the processor 1010 is configured to implement functions of the foregoing processing unit 910, and the interface circuit 1020 is configured to implement functions of the foregoing transceiver unit 920.

When the foregoing communication apparatus is a chip used in the terminal, the terminal chip implements functions of the terminal in the foregoing method embodiment. The terminal chip receives information from another module (for example, a radio frequency module or an antenna) in the terminal, where the information is sent by a network device to the terminal. Alternatively, the terminal chip sends information to another module (for example, a radio frequency module or an antenna) in the terminal, where the information is sent by the terminal to a network device.

When the foregoing communication apparatus is a chip used in the network device, the network device chip implements functions of the network device in the foregoing method embodiment. The network device chip receives information from another module (for example, a radio frequency module or an antenna) in the network device, where the information is sent by a terminal to the network device. Alternatively, the network device chip sends information to another module (for example, a radio frequency module or an antenna) in the network device, where the information is sent by the network device to a terminal.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any regular processor.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in an access network device or a terminal device. Certainly, the processor and the storage medium may exist in an access network device or a terminal device as discrete components.

All or some of the foregoing embodiments may be implemented by using software, hardware, firmware, or any combination thereof. When software is used to implement the embodiments, all or some of the embodiments may be implemented in a form of a computer program product. The computer program product includes one or more computer programs or instructions. When the computer programs or instructions are loaded and executed on a computer, all or some of the procedures or functions in embodiments of this application are executed. The computer may be a general-purpose computer, a dedicated computer, a computer network, an access network device, user equipment, or another programmable apparatus. The computer programs or instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive.

In embodiments of this application, unless otherwise stated or a logical conflict occurs, terms and/or descriptions in different embodiments are consistent and may be mutually referenced, and technical features in different embodiments may be combined based on an internal logical relationship thereof, to form a new embodiment.

In this application, "at least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. In the text descriptions of this application, the character "/" indicates an "or" relationship between the associated objects. In a formula in this application, the character "/" indicates a "division" relationship between the associated objects.

It may be understood that various numbers in embodiments of this application are merely used for differentiation for ease of description, and are not used to limit the scope of embodiments of this application. The sequence numbers of the foregoing processes do not mean execution sequences, and the execution sequences of the processes should be determined based on functions and internal logic of the processes.

**Claims**

1. A communication method, wherein the method comprises:

   receiving first information, wherein the first information comprises a first offset at a first moment, and the first offset is used to determine a measurement window; and
   adjusting the first offset at the first moment based on the offset at the first moment and a first propagation delay difference that corresponds to the first moment and that is between a feeder link of a serving cell and that of a neighboring cell, to obtain a second offset at a second moment.

2. The method according to claim 1, wherein the first propagation delay difference is a feeder link propagation delay difference between the serving cell and the neighboring cell, or the first propagation delay difference is a common timing advance CommonTA difference between the serving cell and the neighboring cell.

3. The method according to claim 1 or 2, wherein the method further comprises:
   obtaining the first propagation delay difference.

4. The method according to claim 3, wherein the obtaining the first propagation delay difference comprises:

   obtaining the first moment;
   receiving second information, wherein the second information comprises a feeder link related parameter; and
   determining the first propagation delay difference based on the first moment and the feeder link related parameter.

5. The method according to claim 1, wherein the first information further comprises the first moment.

6. The method according to claim 1, wherein the first information is system information, and the first moment is an end moment of a system information window of the first information.

7. The method according to claim 2, wherein the first moment is a reference time, and the reference time is a reference time of ephemeris information and a common timing advance.

8. The method according to claim 3, wherein the first information further comprises the first propagation delay difference.

9. The method according to any one of claims 1 to 8, wherein the adjusting the first offset at the first moment based on the offset at the first moment and a first propagation delay difference that corresponds to the first moment and that is between a feeder link of a serving cell and that of a neighboring cell, to obtain a second offset at a second moment comprises:

   determining the second offset at the second moment based on the following formula:

   $$offset\_T2 = (SL2\_T2 - SL1\_T2) + (FL2\_T2 - FL1\_T2) + (FL2\_T1 - FL1\_T1 + T\_sfn) - (FL2\_T1 - FL1\_T1),$$

   wherein $offset\_T2$ is the second offset at the second moment, $SL2\_T2$ is a service link propagation delay of the neighboring cell at the second moment, $SL1\_T2$ is a service link propagation delay of the serving cell at the second moment, $FL2\_T2$ is a feeder link propagation delay of the neighboring cell at the second moment, $FL1\_T2$ is a feeder link propagation delay of the serving cell at the second moment, and $T\_sfn$ is a timing difference between signal sending of the serving cell and signal sending of the neighboring cell.

10. The method according to any one of claims 1 to 9, wherein a time difference between the second moment and the first moment exceeds a specified time difference.

11. The method according to claim 10, wherein the specified time difference is carried in the first information; or

the specified time difference is pre-negotiated; or
the specified time difference is timing duration of a timer.

12. A communication method, wherein the method comprises:

obtaining first information, wherein the first information indicates a first moment and a first offset at the first moment, and the first information is used to determine a measurement window; and
sending the first information.

13. The method according to claim 12, wherein the method further comprises:

receiving second information from a neighboring cell base station, wherein the second information comprises a third offset; and
determining the first offset based on the second information.

14. The method according to claim 13, wherein the third offset is based on a first propagation delay in a feeder link of a neighboring cell; and
the second information further comprises a third moment, and the third moment is a moment corresponding to the third offset.

15. The method according to claim 13 or 14, wherein the method further comprises:

determining a feeder link propagation delay of the neighboring cell at the third moment based on the third moment and feeder link information of the neighboring cell;
determining a feeder link propagation delay of the neighboring cell at the first moment based on the feeder link information of the neighboring cell; and
adjusting the third offset based on the feeder link propagation delay of the neighboring cell at the third moment and the feeder link propagation delay of the neighboring cell at the first moment, to obtain the first offset.

16. The method according to claim 13, wherein the third offset is not based on a first propagation delay in a feeder link of a neighboring cell.

17. The method according to claim 16, wherein the method further comprises:

determining a feeder link propagation delay of the neighboring cell at the first moment based on feeder link information of the neighboring cell; and
adjusting the third offset based on the feeder link propagation delay of the neighboring cell at the first moment, to obtain the first offset.

18. A communication method, wherein the method comprises:

receiving first information from a second network device, wherein the first information comprises a first offset, and the first offset is determined based on an assumption that a feeder link propagation delay is equal to 0;
determining a second offset based on the first information, wherein a first SMTC measurement configuration comprises the second offset, and the first SMTC measurement configuration is used by a terminal device to search for a synchronization signal block SSB; and
sending the first SMTC measurement configuration.

19. The method according to claim 18, wherein the feeder link propagation delay comprises a propagation delay between a non-terrestrial network device and a base station.

20. The method according to claim 19, wherein the propagation delay between the non-terrestrial network device and the base station comprises a propagation delay between the non-terrestrial network device and an uplink synchronization reference point and a propagation delay between the uplink synchronization reference point and the base station.

21. The method according to any one of claims 18 to 20, wherein the first offset corresponds to a first cell, and the first cell belongs to the second network device.

22. The method according to any one of claims 18 to 21, wherein a second SMTC measurement configuration comprises the first offset, and the second SMTC measurement configuration is comprised in the first information.

23. The method according to any one of claims 18 to 22, wherein the method further comprises:
compensating for the feeder link propagation delay when determining the second offset.

24. A communication method, wherein the method comprises:
sending first information to a first network device, wherein the first information comprises a first offset, and the first offset is determined based on an assumption that a feeder link propagation delay is equal to 0.

25. The method according to claim 24, wherein the feeder link propagation delay comprises a propagation delay between a non-terrestrial network device and a base station.

26. The method according to claim 25, wherein the propagation delay between the non-terrestrial network device and the base station comprises a propagation delay between the non-terrestrial network device and an uplink synchronization reference point and a propagation delay between the uplink synchronization reference point and the base station.

27. The method according to any one of claims 24 to 26, wherein the first offset corresponds to a first cell, and the first cell belongs to a second network device.

28. The method according to any one of claims 24 to 27, wherein a second SMTC measurement configuration comprises the first offset, and the second SMTC measurement configuration is comprised in the first information.

29. A communication apparatus, wherein the apparatus comprises a transceiver unit and a processing unit, wherein

the transceiver unit is configured to receive first information, wherein the first information comprises a first offset at a first moment, and the first offset is used to determine a measurement window; and
the processing unit is configured to adjust the first offset at the first moment based on the offset at the first moment and a first propagation delay difference that corresponds to the first moment and that is between a feeder link of a serving cell and that of a neighboring cell, to obtain a second offset at a second moment.

30. The apparatus according to claim 29, wherein the first propagation delay difference is a feeder link propagation delay difference between the serving cell and the neighboring cell, or the first propagation delay difference is a common timing advance CommonTA difference between the serving cell and the neighboring cell.

31. The apparatus according to claim 29 or 30, wherein the processing unit is further configured to obtain the first propagation delay difference.

32. The apparatus according to claim 31, wherein

the processing unit is further configured to obtain the first moment;
the transceiver unit is further configured to receive second information, wherein the second information comprises a feeder link related parameter; and
the processing unit is further configured to determine the first propagation delay difference based on the first moment and the feeder link related parameter.

33. The apparatus according to claim 29, wherein the first information further comprises the first moment.

34. The apparatus according to claim 31, wherein the first information further comprises the first propagation delay difference.

35. A communication apparatus, wherein the apparatus comprises a processing unit and a transceiver unit, wherein

the processing unit is configured to obtain first information, wherein the first information indicates a first moment and a first offset at the first moment, and the first information is used to determine a measurement window; and the transceiver unit is configured to send the first information.

36. The apparatus according to claim 35, wherein

the transceiver unit is further configured to receive second information from a neighboring cell base station, wherein the second information comprises a third offset; and

the processing unit is further configured to determine the first offset based on the second information.

37. The apparatus according to claim 36, wherein the third offset is based on a first propagation delay in a feeder link of a neighboring cell;

the second information further comprises a third moment, and the third moment is a moment corresponding to the third offset;

the processing unit is further configured to determine a feeder link propagation delay of the neighboring cell at the third moment based on the third moment and feeder link information of the neighboring cell;

the processing unit is further configured to determine a feeder link propagation delay of the neighboring cell at the first moment based on the feeder link information of the neighboring cell; and

the processing unit is further configured to adjust the third offset based on the feeder link propagation delay of the neighboring cell at the third moment and the feeder link propagation delay of the neighboring cell at the first moment, to obtain the first offset.

38. The apparatus according to claim 36, wherein the third offset is not based on a first propagation delay in a feeder link of a neighboring cell;

the processing unit is further configured to determine a feeder link propagation delay of the neighboring cell at the first moment based on feeder link information of the neighboring cell; and

the processing unit is further configured to adjust the third offset based on the feeder link propagation delay of the neighboring cell at the first moment, to obtain the first offset.

39. A communication apparatus, wherein the apparatus comprises a processing unit and a transceiver unit, wherein

the transceiver unit is configured to receive first information from a second network device, wherein the first information comprises a first offset, and the first offset is determined based on an assumption that a feeder link propagation delay is equal to 0;

the processing unit is configured to determine a second offset based on the first information, wherein a first SMTC measurement configuration comprises the second offset, and the first SMTC measurement configuration is used by a terminal device to search for a synchronization signal block SSB; and

the transceiver unit is further configured to send the first SMTC measurement configuration.

40. The apparatus according to claim 39, wherein the feeder link propagation delay comprises a propagation delay between a non-terrestrial network device and a base station.

41. The apparatus according to claim 40, wherein the propagation delay between the non-terrestrial network device and the base station comprises a propagation delay between the non-terrestrial network device and an uplink synchronization reference point and a propagation delay between the uplink synchronization reference point and the base station.

42. The apparatus according to any one of claims 39 to 41, wherein the first offset corresponds to a first cell, and the first cell belongs to the second network device.

43. The apparatus according to any one of claims 39 to 42, wherein a second SMTC measurement configuration comprises the first offset, and the second SMTC measurement configuration is comprised in the first information.

44. The apparatus according to any one of claims 39 to 43, wherein the processing unit is further configured to compensate for the feeder link propagation delay when determining the second offset.

45. A communication apparatus, wherein the apparatus comprises a processing unit and a transceiver unit, wherein

the processing unit is configured to generate first information, wherein the first information comprises a first offset, and the first offset is determined based on an assumption that a feeder link propagation delay is equal to 0; and the transceiver unit is configured to send the first information to a first network device.

46. The apparatus according to claim 45, wherein the feeder link propagation delay comprises a propagation delay between a non-terrestrial network device and a base station.

47. The apparatus according to claim 46, wherein the propagation delay between the non-terrestrial network device and the base station comprises a propagation delay between the non-terrestrial network device and an uplink synchronization reference point and a propagation delay between the uplink synchronization reference point and the base station.

48. The apparatus according to any one of claims 45 to 47, wherein the first offset corresponds to a first cell, and the first cell belongs to a second network device.

49. The apparatus according to any one of claims 45 to 48, wherein a second SMTC measurement configuration comprises the first offset, and the second SMTC measurement configuration is comprised in the first information.

50. A communication system, comprising the communication apparatus according to any one of claims 29 to 34 and the communication apparatus according to any one of claims 35 to 38.

51. A communication apparatus, comprising a processor and a storage medium, wherein the storage medium stores instructions, and when the instructions are run by the processor, the method according to any one of claims 1 to 11 is implemented, or the method according to any one of claims 12 to 17 is implemented, or the method according to any one of claims 18 to 28 is implemented.

52. A computer-readable storage medium, wherein the computer-readable storage medium comprises instructions, and when the instructions are run by a processor, the method according to any one of claims 1 to 11 is implemented, or the method according to any one of claims 12 to 17 is implemented, or the method according to any one of claims 18 to 28 is implemented.

FIG. 1

FIG. 2

FIG. 3a

FIG. 3b

Moment at which a
signal of a serving cell
is sent

Moment at which a
signal of a neighboring
cell is sent

SFN 1

SFN 2

T_sfn

FIG. 4

FIG. 5

FIG. 6

FIG. 7

```
┌──────────┐              ┌──────────────┐              ┌──────────────────┐
│    UE    │              │ Serving base │              │ Neighboring cell │
│          │              │   station    │              │   base station   │
└────┬─────┘              └──────┬───────┘              └────────┬─────────┘
     │                           │   S801: Second information    │
     │                           │    (including a third offset) │
     │                           │◄─────────────────────────────│
     │            ┌──────────────┴───────────────────┐           │
     │            │ S802: Determine a first offset    │           │
     │            │ based on the second information    │           │
     │            └──────────────┬───────────────────┘           │
     │   S803: First information  │                               │
     │   (including the first offset│                             │
     │       at a first moment)    │                             │
     │◄───────────────────────────│                               │
┌────┴──────────────────────────────────────────┐                │
│ S804: Adjust the first offset at the first moment│              │
│ based on the first offset at the first moment and a│            │
│ first propagation delay difference that corresponds│            │
│ to the first moment and that is between a feeder  │             │
│ link of a serving cell and that of a neighboring  │             │
│ cell, to obtain a second offset at a second moment │            │
└────┬──────────────────────────────────────────┘                │
     │                           │                               │
```

FIG. 8

900

Communication apparatus

Processing unit — 910

Transceiver unit — 920

FIG. 9

1000

Communication apparatus

1010 — Processor

Interface circuit — 1020

1030

Memory

FIG. 10

## INTERNATIONAL SEARCH REPORT

| | International application No. |
|---|---|
| | **PCT/CN2023/140264** |

| **A.** | **CLASSIFICATION OF SUBJECT MATTER** |
|---|---|
| | H04W 24/08(2009.01)i |

According to International Patent Classification (IPC) or to both national classification and IPC

| **B.** | **FIELDS SEARCHED** |
|---|---|

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

CNTXT, CNKI, ENTXT, ENTXTC, VEN, 3GPP: 测量定时配置, 偏置, 偏移, 服务, 邻, 馈, 时延, 延迟, 延时, 差, SMTC, offset, serving, neighbour, neighbor, feeder, delay, difference

| **C.** | **DOCUMENTS CONSIDERED TO BE RELEVANT** | | |
|---|---|---|---|
| Category* | Citation of document, with indication, where appropriate, of the relevant passages | | Relevant to claim No. |
| Y | LG ELECTRONICS INC. "UE based SMTC adjustment" *3GPP TSG-RAN WG2 Meeting #118 R2-2206029*, 20 May 2022 (2022-05-20), pages 1-2 | | 1-52 |
| Y | ZTE CORP. et al. "SMTC configuration in asynchronous networks" *3GPP TSG-RAN WG2 Meeting #101 R2-1802022*, 02 March 2018 (2018-03-02), sections 1-3, and figure 2 | | 1-52 |
| A | CN 114698412 A (BEIJING XIAOMI MOBILE SOFTWARE CO., LTD.) 01 July 2022 (2022-07-01) entire document | | 1-52 |
| A | US 2022046498 A1 (FG INNOVATION CO., LTD.) 10 February 2022 (2022-02-10) entire document | | 1-52 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **19 February 2024** | **22 February 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/140264**

| Patent document cited in search report | | | Publication date (day/month/year) | Patent family member(s) | | | Publication date (day/month/year) |
|---|---|---|---|---|---|---|---|
| CN | 114698412 | A | 01 July 2022 | WO | 2022088107 | A1 | 05 May 2022 |
| US | 2022046498 | A1 | 10 February 2022 | WO | 2022028620 | A1 | 10 February 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310101444